# EUROPEAN PATENT APPLICATION

(11) **EP 2 466 971 A1**
(43) Date of publication of application: **20.06.2012**
(21) Application number: 10195452.7
(22) Date of filing: 16.12.2010
(51) Int. Cl.: H04W 52/02

(54) **A router and a method of operating a router**

(71) Applicant: NXP B.V., 5656 AG Eindhoven (NL)
(72) Inventor: Chilton, Paul, Redhill, Surrey RH1 1DL (GB); Wootton, Peter, Redhill, Surrey RH1 1DL (GB)
(74) Representative: Hardingham, Christopher Mark

(57) **Abstract**

A router, for example a router implemented according to IEEE802.15.4, can typically be used in home automation to control for example a light or number of lights. The router in such a network is typically always on. A method and apparatus for reducing the power consumption of the router are disclosed. The receiver is configured to periodically switch off the receiver, for a predetermined time, whilst the router is in operation.

## Description

### Field of the Invention

This invention relates to a router for routing data packets in a network. It further relates to light fittings, lighting control networks and heating control networks comprising such routers. It further relates to methods of operating such routers.

### Background of the Invention

Devices configured to operate together in a network can be used in building automation for example to control lighting or heating systems in domestic or commercial buildings.

An example of such a device is one which complies with IEEE802.15.4. An IEEE802.15.4 personal area network (PAN) can include end nodes, and co-ordinator nodes. End nodes typically send or receive data packets or frames to or from other nodes in the network, and enter a standby/sleep state between events to reduce power consumption. Co-ordinator nodes act as routers within the network. One co-ordinator node acts as the PAN co-ordinator node which is the node that controls the setup and configuration of the PAN. The co-ordinator nodes route messages from one node to another node, as well as sending/receiving their own data and control messages. Co-ordinator nodes operate as always on devices. Coordinator nodes control the overall setup and control of the network.

A node in an IEEE802.15.4 network typically contains a microprocessor and radio transmitter/receiver together with various peripherals and memory devices. These may be integrated into a single semiconductor device. An IEEE 802.15.4 based lighting network will typically have light switches incorporating IEEE802.15.4 end devices, whereas the light fitments incorporate IEEE802.15.4 router nodes which both control their own light and operate as routers, routing messages to other nodes. Such router devices can be configured to implement networks for example according to the Zigbee standard to control lighting in buildings.

### Summary of the invention

In a first aspect there is described a router for routing data packets in a control network, the router comprising a transmitter, a receiver, and a controller coupled to the transmitter and the receiver, wherein the controller is configured to periodically switch off the receiver for a predetermined off-time whilst the router is in operation.

By periodically switching on and off the receiver, the power consumption of the router is reduced while maintaining the always on requirement for the router.

In an embodiment of the router the receiver is configured to operate according to a duty cycle consisting of an on-time and on off-time, and the controller is configured to respectively extend or further extend the on-time in response to receiving a data packet at the end of the respective on-time or extended on-time.

By extending the on-time of the receiver, by one or more extension periods, it may be at least partly avoided that the route "drops" packets which are being received at the moment at which the route would otherwise switch off. It will be appreciated that, in embodiments, the on-time may be extended for an arbitrary number of extensions, and the extensions may have the same or varying durations. A duty-cycle can thus have a fixed period or can be varied. In a further embodiment of the router, the controller is configured to respectively extend or further extend at least one of the on-time and the off-time in response to the transmitter being transmitting at the end of the at least one of the on-time and the off-time, or the extended at least one of the on-time and the off-time, respectively.

By adjusting the at least one of the on-time and the off-time, the power consumption may be kept to a minimum level while facilitating optimisation of the network performance by reducing the packet error rate.

In embodiments of the router, the controller is configured to periodically switch off the transmitter for a predetermined off-period.

Periodically switching off the transmitter as well as the receiver further reduces power consumption.

In a further embodiment, the router is configured as a wireless router.

In a further embodiment, a router is incorporated into a light fitting.

In a further embodiment, the router is configured to receive or transmit data packets in accordance with the IEEE802.15.4 protocol. As the skilled person will appreciate, the IEEE802.15.4 protocol is an example of an acknowledged protocol which means that a transmitter will re-send data if the reception of the data is not acknowledged. In embodiments of the invention, it is found that resending the data helps to reduce the packet error rate, as it may allow for resent packets to arrive when the receiver is in a receiving state, which occurs during at least a part of the on-time, in circumstances that the initially sent packets was not received (as the receiver is then not in a receiving state). It will be appreciated that the invention is not limited to IEEE802.15.4-compliant networks.

In embodiments of the router, the controller is configured to adapt at least one of the on-time and the off-time of the duty-cycle in response to the number of data packets received in one or more previous duty-cycles.

By adapting the duty-cycle of the receiver, the on-time and off-time can be adjusted dependent on the network traffic, for instance to reduce the packet error rate of the network due to transmitted data being lost. The exact form of the adjustment will depend to a large extent on the specific application in which the route is used. For instance, in a lighting network, it may be that traffic is "clustered" together around specific times (for instance, when a commercial building is first entered after being unoccupied during a night-time); in such circumstances, the presence of a packet may increase the probability that another packet may rapidly follow, so it may be appropriate to reduce the off-time, for an interval after receiving one or more packets. In other circumstances, it may be that traffic is evenly distributed: in such circumstances, receipt of a packet may reduce the probability that another packet will be due, so the off-time may be increased for an interval after receiving one of more packets. In general, it will be appreciated that the traffic history may have an effect on the likely traffic future, and the router may be adaptive to take this into account.

In further embodiments at least one light fitting comprising a router can be configured in a network.

This may allow lights installed in a building to be controlled through a network comprising routers.

In further embodiments, the router can be included in a heating control apparatus for a building.

According to a second aspect, there is provided a method of operating a router comprising a transmitter, a receiver, and a controller coupled to the transmitter and the receiver, the controller being configured to switch the receiver on and off; wherein the method comprises periodically switching the receiver off for a predetermined receiver off-time whilst the router is in operation.

In an embodiment there is provided a method of operating a router wherein the receiver has a duty cycle comprising an on-time and on off-time, and wherein the on-time is respectively extended or further extended in response to the receiver being receiving a data packet at the end of the respective on-time or extended on-time.

This method controls the receiver in the router node to periodically turn the radio receiver on and off. Adequate network performance and reliability may thereby be maintained, whilst reducing the standby current of the device.

In embodiments, at least one of the on-time and off-time is respectively extended or further extended in response to the transmitter being transmitting at the end of the at least one of the on-time and the off-time, or extended at least one of the on-time and the off-time, respectively.

In embodiments, the on-time or off-time of the duty-cycle is adapted in response to the number of data packets received in a previous duty-cycle. Thus as used here-in, predetermined may include, without limitation, both predetermined a *priori*, that is to say, during a design, manufacture, calibration, test or other pre-operation phase of the lifecycle of the router, and predetermined during operation, that is to say, the off-period is determined prior to the commencement of that specific off-period. Such a predetermination may be made based on one or more previous operation cycles which may immediately precede the cycle in question, or based on more distantly related cycles. Alternatively and without limitation, the predetermination may be based on knowledge of the type of application in which the router is being or is to be used.

In an embodiment, the method further comprises transmitting data during the off-time of the receiver.

These and other aspects of the invention will be apparent from, and elucidated with reference to, the embodiments described hereinafter.

### Brief description of Drawings

Embodiments of the invention will be described, by way of example only, with reference to the drawings, in which
Figure 1 shows a router according to an embodiment.
Figure 2 illustrates a flow diagram of a method of operation of a router according to an embodiment.
Figure 3 illustrates a flow diagram of a method of operation of a router according to a further embodiment.
Figure 4 illustrates a flow diagram of a method of operation of a router according to a further embodiment.
Figure 5 illustrates a flow diagram of a method of operation of a router according to a further embodiment.
Figure 6 illustrates a duty cycle of operation of a router according to a further embodiment.
Figure 7 illustrates a light fitting including a router according to a further embodiment.
Figure 8 illustrates a lighting control network according to a further embodiment.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar feature in modified and different embodiments.

### Detailed description of embodiments

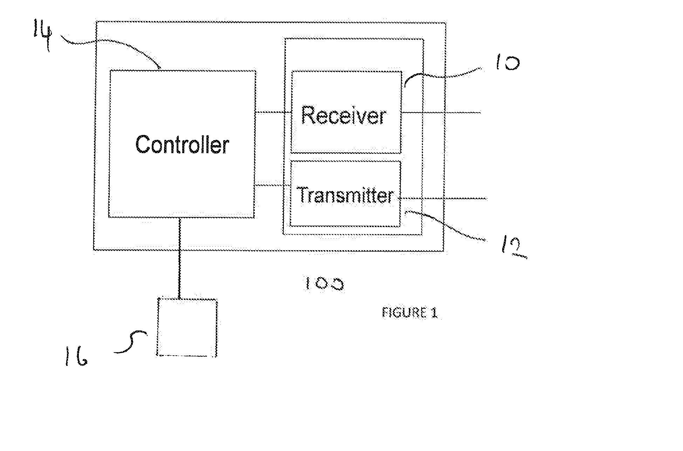

Figure 1 illustrates a router 100, which may comprise a co-ordinator node. A receiver 10 may be coupled to a network and receive data from a node in the network. A transmitter 12 may be coupled to a network and transmit data to other nodes in the network. A controller 14 is connected to the receiver 10 and transmitter 12. As shown the controller 14 is directly connected to the receiver 10 and to the transmitter 12, however, it will be appreciated that the controller 14 may be indirectly connected, or otherwise coupled, to the receiver 10 and to the transmitter 12. The controller 14 may be connected to a fitment 16. In some embodiments the controller 14 can include a timer which generates a signal which is used to switch the receiver on or off. In some embodiments, the receiver 10 may be switched off by disconnecting the power supply to the receiver 10. In further embodiments power may always be connected, but the receiver 10 may be switched off by disabling the receiver by some other means such as switching off a clock signal. In further embodiments controller 14 can include a programmable timer and a microprocessor. The microprocessor can program the timer to vary the off-time of the receiver 10. In some embodiments, controller 14 may be connected to a fitment 16. In further embodiments, fitment 16 can be a light fitment or other fitment such as a heating controller.

In use the controller 14 switches on the receiver 10. The receiver 10 is then able to receive data transmitted by a further node. If any data is received while the receiver is switched on, the controller 14 is able to determine whether the received data is to be used to control a fitment 16 or whether it is to be transmitted to a further node in a network by transmitter 12. The receiver is periodically switched off for a predetermined off-time. It has been found that it may be possible to off periodically the receiver for a predetermined off-time. In some embodiments the period may be in the range of 400 microseconds to 1500 microseconds. In further embodiments the predetermined off-time may be between 6% and 75 % of the period.

It will be appreciated that, in circumstances where the packet error rate is too high, due to missed packets transmitted while the receiver 10 is switched off, the packet error rate may be adjusted by reducing the value of the pre-determined off-time. In some applications, for example controlling a lighting network, an acceptable packet error rate may be in the range of 3% to 5%

In some embodiments router 100 can be configured to receive data transmitted over wires which can also be used to supply power to a light. In such cases, the receiver 10 receives data from a wire. In other embodiments, the router 100 is configured to receive data wirelessly; thus, in embodiments receiver 10 can be a radio frequency receiver. Similarly, the transmitter may be arranged to transmit data over a wire; whilst in other embodiments transmitter 12 can be a radio frequency or other wireless transmitter.

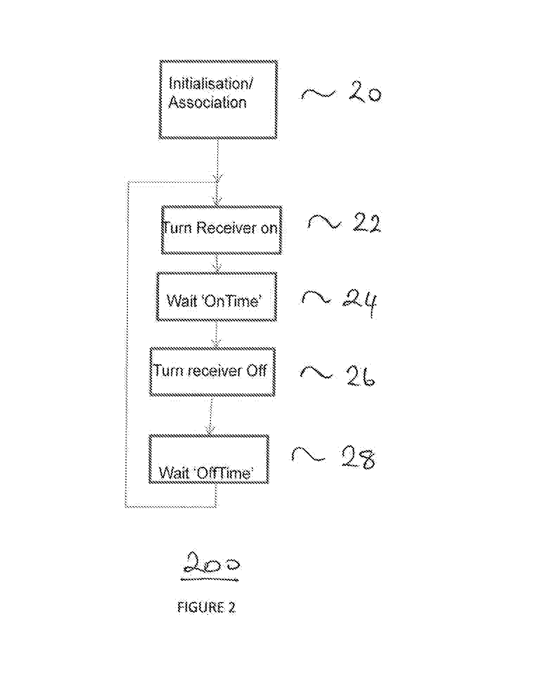

Figure 2 shows an example control method 200 for a router 100. In a first step router 100 initializes and associates 20 with other nodes in the network. The receiver 10 is then switched on, at step 22 which may include applying power and/or a clock signal to receiver 10. The receiver may take a finite period, or start-up period, before is it able to receive data. Once the receiver is able to receive data, the receiver 10 remains on for a further time, which may be termed a listening time 24. As a minimum, the duration of listening time 24 would normally be sufficient to allow for at least one data packet and or data frame to be received, and preferably to be decoded. The period during which the receiver is in state 22 or 24 is, in combination, termed as an "on-time" herein. The receiver 10 is then switched off 26 which may include removing power from the receiver and/or stopping a clock signal. After waiting for a pre-determined off-time 28, the receiver is then switched on again 22 and the cycle repeats. It will be appreciated, that as described herein, the step of turning the receiver off, 26, is considered to be momentary. In circumstances where this step takes a finite amount of time, the "off-time" is the sum of the time to turn-off (26), and the time the receiver is in the off-state.

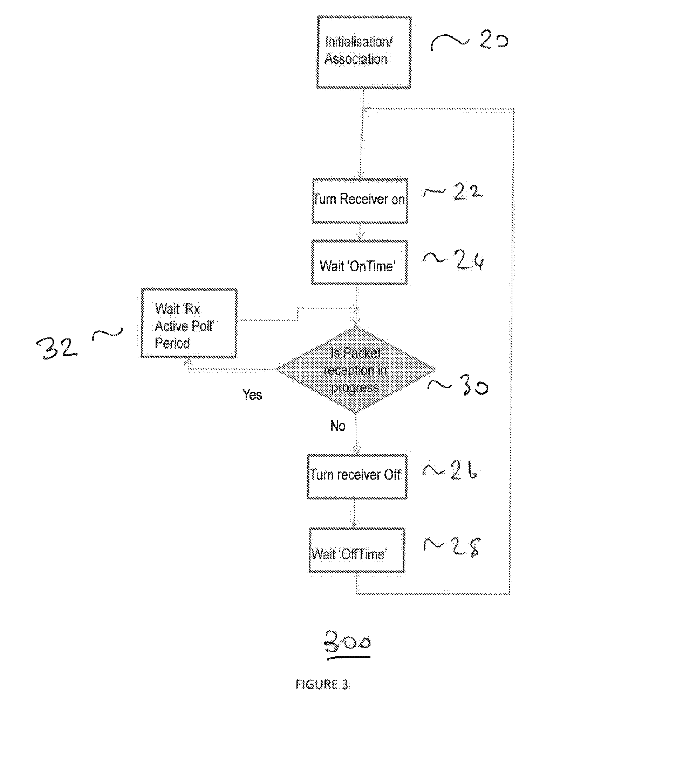

Figure 3 shows a further example control method 300 for a router 100. In a first step router 100 initializes and associates 20 with other nodes in the network. The receiver 10 is then switched on 22 which may include applying power and/or a clock signal to receiver 10. Once the receiver is able to receive data the receiver 10 remains on for a further listening time 24, which may typically allow sufficient time for data packets and data frames to be received and decoded. A check is then made to determine whether packet reception is in progress 30. If packet reception is in progress then the on-time is further extended by an Rx_active_poll_period time 32. Packet reception check 30 is made again after this time and the on-time may be extended again if packet reception is still in progress. If no packets are being received then receiver 10 is then switched off 26 which may include removing power from the receiver and/or stopping a clock signal. After waiting for a pre-determined off-time 28, the receiver is then switched on again 22 and the cycle repeats.

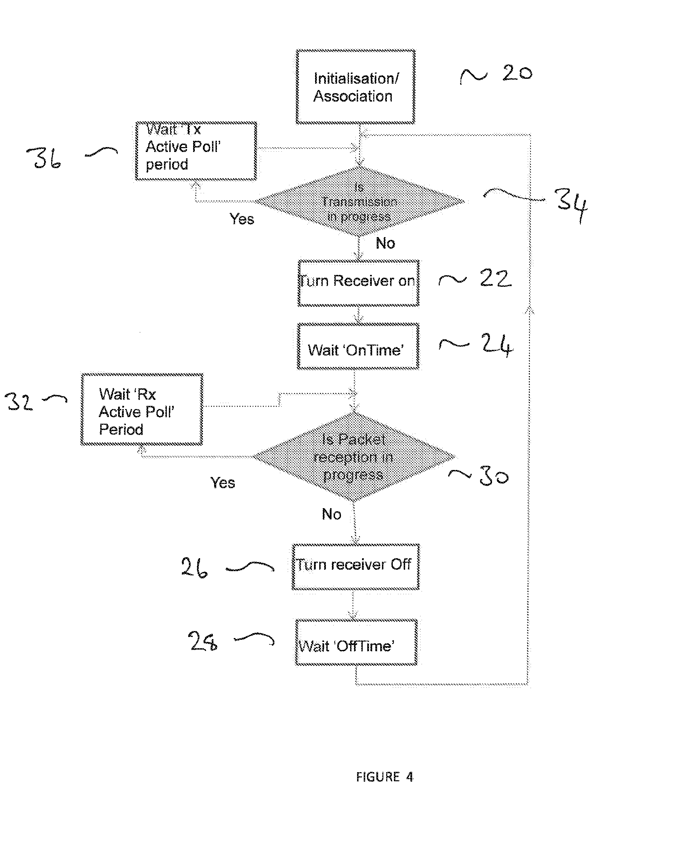

Figure 4 shows a further example control method 400 for a router 100. In a first step router 100 initializes and associates 20 with other nodes in the network.

A transmission check 34 is then made to determine whether a transmission is in progress. If a transmission check is made then a delay of Tx_active-poll_period 36 is made before the receiver 10 is switched on 22. After waiting for a time of Tx_active-poll_period 36, the transmission in progress check 34 is made again and if transmission is still in progress control method 400 waits for a further of Tx_active-poll_period 36. Once the transmission is no longer in progress the receiver 10 is then switched on 22 which may include applying power and/or a clock signal to receiver 10. Once the receiver 10 is able to receive data the receiver remains on for a listening time24 to allow sufficient time for data packets and data frames to be received and decoded. A check is then made to determine whether packet reception is in progress 30. If packet reception is in progress then the on-time is extended by an Rx_active_poll_period time 32. Packet reception check 30 is made again after this time and the on-time is further extended if packet reception is still in progress. It will be apparent that there may be multiple further extensions. If no packets are being received, that is to say, if there is no packet being received at the moment of the end of the respective Rx_active_poll_period 32 or the first listening time 24, then receiver 10 is then switched off 26 which may include removing power from the receiver and/or stopping a clock signal. After waiting for a pre-determined off-time 28, the method returns to check whether transmission is in progress 34 and the cycle repeats.

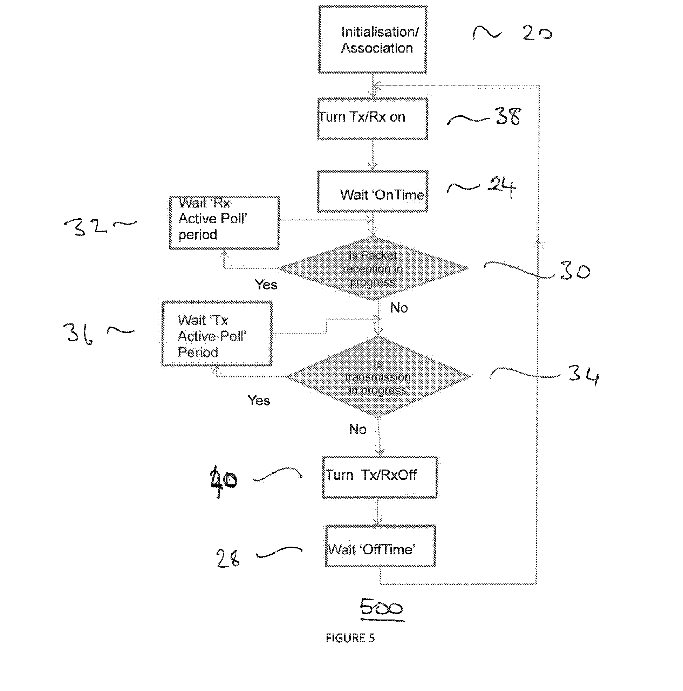

Figure 5 shows a further example control method 500 for a router 100 where both transmitter 12 and receiver 10 are switched on and off. In a first step router 100 initializes and associates 20 with other nodes in the network. The transmitter and receiver are then switched on 38. This may include applying power and/or a clock signal to the transmitter 12 and receiver 10.

Once the receiver 10 is able to receive data the control method 500 waits for further listening time 24 to allow sufficient time for data packets and data frames to be received and decoded. A check is then made to determine whether packet reception is in progress 30. If packet reception is in progress then the on-time is extended by an Rx_active_poll_period time 32.

Packet reception check 30 is made again after this time and the on-time may be further extended by a further Rx_active_poll_period time 32 if packet reception is still in progress. If no packets are being received, a transmission check 34 is then made to determine whether a transmission is in progress. If a transmission is in progress then a delay of Tx_active-poll_period 36 is made before the receiver 10 and transmitter 12 are switched on 22. After waiting for a time of Tx_active-poll_period 36, the transmission in progress check 34 is made again and if transmission is still in progress control method 400 waits for a further of Tx_active-poll_period 36. If no packets are being received then the receiver 10 and the transmitter 12 is switched off 40 which may include removing power from the receiver 10 and transmitter 12 and/or stopping a clock signal. After waiting for a pre-determined off-time 28, the method returns to check whether transmission is in progress 34 and the cycle repeats.

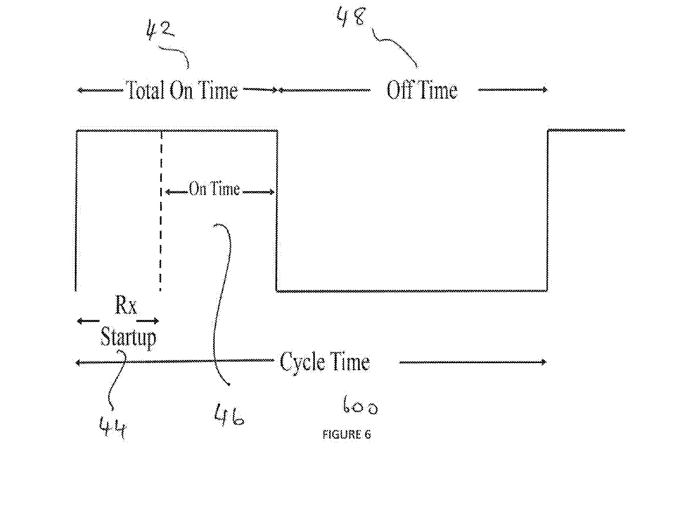

Figure 6 shows different phases of the receiver 10 duty-cycle 600 in a router 100. Each duty cycle 600 consists of receiver on-time 42 and receiver off-time 48. The receiver-on-time 42 may include a receiver start-up time 44 which is the time required to enable the receiver 10 to receive data packets. The receiver on-time 42 may further include a receiver listening time 46 which is the time where the receiver 10 is enabled to receive data packets. In some embodiments the receiver start-up time 44 may be 120 microseconds. In further embodiments the transmitter 12 may transmit data packets during a receiver off-time 48. In further embodiments the transmitter 12 may transmit data packets during the receiver on-time 42. In embodiments the receiver duty-cycle 600 may be a constant time or irregular. In further embodiments the duty-cycle 600 may be irregular with the duration of receiver off time 48 varying dependent on whether or not the transmitter starts transmitting during the receiver off time 48. In other embodiments the duty-cycle 600 may be irregular with receiver-on-time 42 varying dependent on whether the data packets are received during the receiver listening time 46. In typical, but nonlimiting, applications the receiver duty cycle 600 may vary between 400 microseconds and 1500 microseconds.

In embodiments the controller 14 may adapt the duty-cycle 600 in response to network activity. For example, in some applications, a maximum off-time may be defined based on an average packet arrival rate for a network and the desired packet error rate. The average packet arrival rate for a network may be predetermined depending on the application of the network. In applications such as a lighting network an average packet arrival rate may be 10 per second and a maximum off-time may be 1 second. If a packet is received, then the off-time value may be reduced to a much smaller value, for example between 0 and 100 microseconds since, because data may be sent in bursts, there is a high probability that a further packet will be transmitted to router 100 in the following duty cycle. However, if a packet has not been received by receiver 10 for two or more duty cycles, then the off-time may be increased, since it is likely that the data burst has ended and there is a lower probability of data being transmitted to router 100. The off-time may be incrementally increased every duty-cycle 600 in which receiver 10 does not receive a data packet until the value of the maximum off-time is reached.

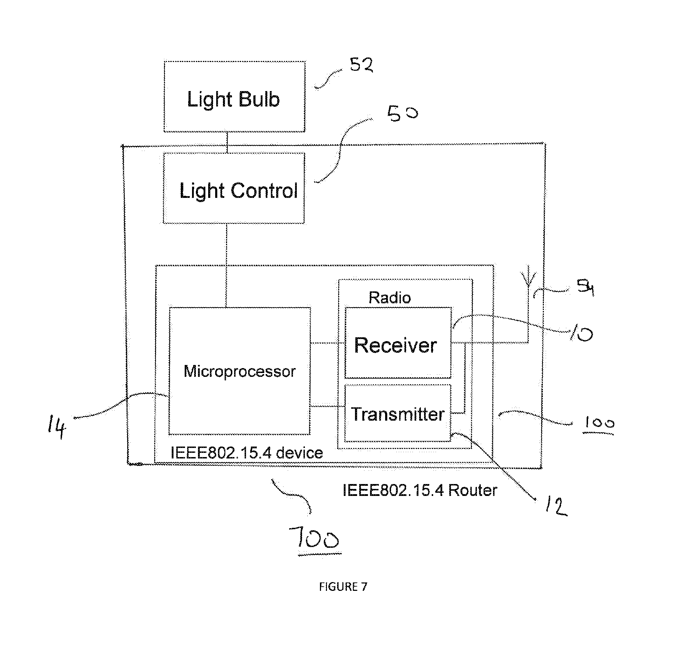

Figure 7 shows a light fitment 700 including a router 100 having a radio receiver 40 and a radio transmitter 42. Receiver 10 and transmitter 12 are connected to antenna 44. A controller 14 is connected to the receiver 10 and transmitter 12. The controller 14 may include a microprocessor. Controller 14 may be connected to a light control circuit 50. Light control circuit 50 may connect to a light source 52 which may be a light bulb, led, halogen bulb or other light source suitable for lighting industrial, commercial or domestic premises. In embodiments the controller 14, receiver 10 and transmitter 12 and light control circuit 50 may be integrated onto a single integrated circuit.

In use the router 100 in light fitment 700 may operate in accordance with any of methods of operation 200, 300, 400, 500 or other method described herein.

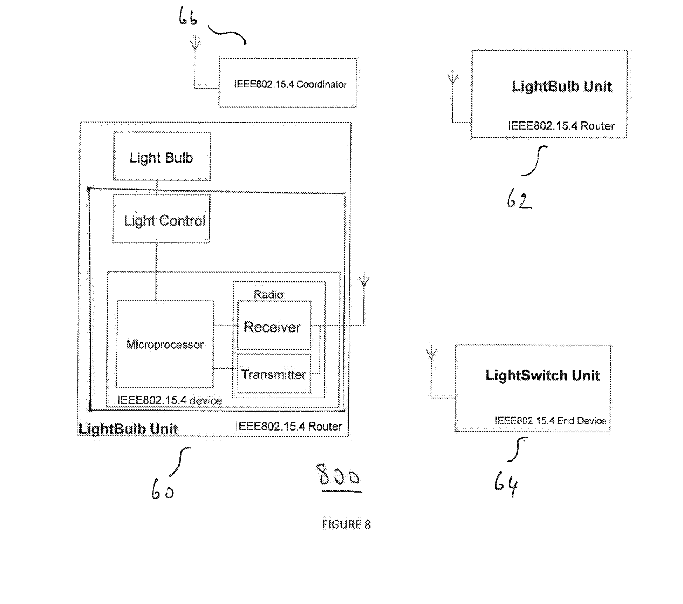

Figure 8 illustrates a lighting network 800 with wireless control which may be in compliance with IEEE802.15.4. The lighting network 800 may include a light unit 60 having a light fitment 700 and a light source 52. Further light unit 62 may also include a light fitment 700 and light source 52. Light unit 60 and further light unit 62 may be configured as routers in the network and can also control their respective light sources. Light unit 60 and further light unit 62 may or may not be identical. Light switch unit 64 may be configured as an end device and may independently control light unit 60 and further light unit 62. A coordinator unit 66 may configure and control the lighting network 800.

In operation control signals from light switch unit 64 may be transmitted to light unit 60. If receiver 10 in light unit 60 is in the off-time 48 of its duty cycle 600 then light switch unit 64 may re-transmit the control data. If receiver 10 is in the on-time 46 of duty cycle 600 then the received data may be decoded if it is intended for the light in 60. Alternatively the data may be transmitted to further light bulb unit 62 or co-ordinator unit 66.

In further embodiments a network of routers may be used to control building heating systems (not shown). In other embodiments a network of routers may be used to control a combination of lighting, heating and electrical appliances used in buildings. Other embodiments can be configured to implement building automation systems according to the Zigbee standard.

From reading the present disclosure, other variations and modifications will be apparent to the skilled person. Such variations and modifications may involve equivalent and other features which are already known in the art of routers, and which may be used instead of, or in addition to, features already described herein.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub-combination.

The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. A router for routing data packets in a control network, the router comprising:
a transmitter,
a receiver, and
a controller coupled to the transmitter and the receiver, wherein the controller is configured to periodically switch off the receiver for a predetermined off-time.

2. A router according to claim 1 wherein the receiver is configured to operate according to a duty cycle consisting of an on-time and on off-time, and wherein the controller is configured to respectively extend or further extend the on-time in response to receiving a data packet at the end of the respective on-time or extended on-time.

3. A router according to claim 1 or 2, wherein the controller is configured to respectively extend or further extend at least one of the on-time and the off-time in response to the transmitter being transmitting at the end of the at least one of the on-time and the off-time, or the extended at least one of the on-time and the off-time, respectively.

4. A router according to any preceding claim wherein the controller is configured to periodically switch off the transmitter for a predetermined off-period.

5. A router according to any of claims 1 to 4 wherein the router is configured as a wireless router.

6. A router according to any of claims 1 to 5, wherein the router is configured to receive or transmit data packets in accordance with the IEEE802.15.4 protocol.

7. A router according to any of claims 2 to 6, wherein the controller is configured to adapt at least one of the on-time and the off-time of the duty-cycle in response to the number of data packets received in one or more previous duty-cycles.

8. A light fitting configured to accommodate a light and comprising the router of any preceding claim.

9. A lighting control network comprising at least one light fitting according to claim 8.

10. A heating control apparatus for a building comprising the router of any of claims 1 to 7.

11. A method of operating a router comprising
a transmitter,
a receiver,
and a controller coupled to the transmitter and the receiver, the controller being configured to switch the receiver on and off; wherein the method comprises periodically switching the receiver off for a predetermined receiver off-time whilst the router is in operation.

12. A method of operating a router according to claim 11, the receiver having a duty cycle comprising an on-time and on off-time, wherein the on-time is respectively extended or further extended in response to the receiver being receiving a data packet at the end of the respective on-time or extended on-time.

13. A method of operating a router according to claim 12, wherein at least one of the on-time and the off-time is respectively extended or further extended in response to the transmitter being transmitting at the end of the at least one of the on-time and the off-time, or extended at least one of the on-time and the off-time, respectively.

14. A method of operating a router according to any of claims 11 to 13, the method further comprising periodically switching off the transmitter for a predetermined transmitter-off-time whilst the router is in operation.

15. A method of operating a router according to any of claims 12 to 14, wherein the on-time or off-time of the duty-cycle is adapted in response to the number of data packets received in a previous duty-cycle.
